# EUROPÄISCHE PATENTSCHRIFT

(11) **EP 4 031 766 B1**
(45) Veröffentlichungstag und Bekanntmachung des Hinweises auf die Patenterteilung: **15.11.2023**
(21) Anmeldenummer: 20772268.7
(22) Anmeldetag: 15.09.2020
(51) Int. Cl.: F03G 7/06

(54) **THERMISCHE AKTORANORDNUNG MIT VERBESSERTER RÜCKSTELLZEIT**
THERMAL ACTUATOR ARRANGEMENT HAVING IMPROVED RESET TIME
ENSEMBLE ACTIONNEUR THERMIQUE AYANT UN TEMPS DE RÉINITIALISATION AMÉLIORÉ

(30) Priorität: 18.09.2019 DE 102019125143
(43) Veröffentlichungstag der Anmeldung: 27.07.2022
(73) Patentinhaber: Universität des Saarlandes, 66123 Saarbrücken (DE); ZeMA-Zentrum für Mechatronik und Automatisierungstechnik gGmbH, 66121 Saarbrücken (DE)
(72) Erfinder: BRITZ, Rouven, 66119 Saarbrücken (DE); SEELECKE, Stefan, 66119 Saarbrücken (DE); MOTZKI, Paul, 66127 Saarbrücken (DE)
(74) Vertreter: Banse & Steglich Patentanwälte PartmbB
(86) Internationale Anmeldenummer: PCT/EP2020/075713
(87) Internationale Veröffentlichungsnummer: WO 2021/052933

(56) Entgegenhaltungen:
- EP-A1- 2 937 565
- DE-A1-102012 104 901
- DE-A1-102012 208 423
- DE-A1-102014 113 065
- DE-T5-112017 004 705

## Beschreibung

### Technisches Gebiet

Die Erfindung betrifft thermische Aktoranordnungen, insbesondere Stellaktoren, die durch ein thermisches Aktorelement gestellt werden können.

### Technischer Hintergrund

Als thermische Aktoranordnungen werden Aktoren mit thermischen Aktorelementen bezeichnet, die durch Einwirkung von Wärme eine Stellbewegung hervorrufen können. Thermische Aktoranordnungen können beispielsweise mit thermoelastischen Aktorelementen ausgebildet sein, die ein thermoelastisches Material (auch als elastokalorisches oder mechanokalorisches Material bezeichnet) aufweisen. Derartige thermoelastische Materialien ändern ihre Mikrostruktur bei Einwirkung einer Temperaturänderung. Dadurch können thermoelastische Elemente bei Erwärmung ihre Abmessungen verringern bzw. eine Zugkraft ausüben. Im Falle einer Abkühlung nimmt das thermoelastische Element insbesondere bei Vorliegen einer entsprechenden Rückstellkraft die ursprüngliche Form wieder ein. Eine Gruppe gebräuchlicher thermoelastischen Materialien sind Formgedächtnislegierungen.

Thermische Aktoren werden in aller Regel zur Verstellung eines Stellelements zwischen zwei definierten Stellpositionen verwendet, wie beispielsweise zur Ansteuerung eines Ventils. Ein Rückstellen von Stellaktoren ist in bestimmten Anwendungen zeitkritisch. So muss beispielsweise bei einem Ventilaktuator ein Schließen des Ventils im Falle einer Notabschaltung sehr schnell erfolgen. Die Verwendung eines thermischen Aktors, der durch eine Erwärmung von thermoelastischen Material aktivierbar ist, kommt für die Realisierung der Notabschaltungsfunktion nicht in Frage, da eine Rückstellung durch Abkühlen des thermoelastischen Materials in der Regel zu lange dauert. Andere Mechanismen zur schnellen Rückstellung des Aktors sind aufwändig und haben einen hohen Bauraumbedarf.

Darüber hinaus sind antagonistische thermische Aktoren bekannt, bei denen eine Rückstellbewegung durch ein weiteres thermoelastisches Element bewirkt wird. Beispielsweise ist aus der Druckschrift DE 199 63 501 A1 ein Aktor für ein Stellglied bekannt, das zwischen einer Grundposition und einer Stellposition verstellbar ist. Der Aktuator weist gegeneinander wirkende Formgedächtniselemente auf, von denen ein erstes Formgedächtniselement bei Überschreiten einer bestimmten Temperatur in Richtung einer Stellposition und das zweite Formgedächtniselement entsprechend in Gegenrichtung wirksam ist.

Aus der Druckschrift US 8,707,694 B2 ist ein Aktuator mit einem ersten Formgedächtniselement bekannt, das eine Kraft auf ein Stellelement des Aktuators ausüben kann, und ein weiteres Formgedächtniselement umfasst, das eine Gegenkraft auf das Stellelement ausübt. Das Stellelement dient zum Betreiben eines Ventils, das durch selektives Ansteuern des ersten und zweiten Formgedächtniselementes aktiviert bzw. deaktiviert werden kann.

Auch aus der Druckschrift WO 2019/106340 ist ein thermoelastischer Aktuator mit einem thermoelastischen Draht und einem Stellglied bekannt, wobei der thermoelastische Draht zwischen einem statischen Teil und dem Stellglied angeordnet ist, um durch Kontraktion eine Bewegung des Stellglieds bezüglich des feststehenden Teils zu bewirken. Ferner ist ein Rückstellelement vorgesehen, das mit dem Stellglied verbunden ist, um das Stellglied zurückzustellen.

In herkömmlichen antagonistischen thermoelastischen Aktoranordnungen ist ein schnelles Rückstellen des Stellelements ebenfalls nicht ohne Weiteres möglich, da die Rückstellgeschwindigkeit direkt von den Materialeigenschaften des aktivierten thermoelastischen Elements und dessen Abkühlgeschwindigkeit abhängt. Zudem bewirkt eine Dehnung des thermoelastischen Elementes im aktivierten Zustand eine Degradation des thermoelastischen Materials, so dass eine Rückstellung durch Ausüben einer entsprechenden Rückstellkraft auf ein aktiviertes (kontrahiertes) Element eine Verringerung der Lebensdauer zur Folge hat.

Zudem weisen herkömmliche antagonistische thermoelastische Aktoranordnungen keine definierte Rückstellposition auf, die im unbestromten Fall zu einer undefinierten Stellung der Aktoranordnung führen kann.

Die Druckschrift DE 10 2012 104 901 A1 offenbart einen Aktor zur Betätigung eines Stellelementes mit einem Stellelement, welches an einem Kraftübertragungsglied befestigt ist, einer Öffnungsfeder aus einer Formgedächtnislegierung, welche auf das Kraftübertragungsglied in einer ersten Richtung wirkt, wobei die Federkraft von der Temperatur der Öffnungsfeder abhängt und einer Rückstellfeder, welche auf das Kraftübertragungsglied in einer zur ersten Richtung entgegengesetzten Richtung wirkt, wobei eine Schließfeder aus einer Formgedächtnislegierung auf das Kraftübertragungsglied in einer zur ersten Richtung entgegengesetzten Richtung wirkt.

Es ist somit Aufgabe der vorliegenden Erfindung, eine thermische Aktoranordnung zur Verfügung zu stellen, die eine verbesserte Rückstellzeit und eine definierte Stellposition im unbestromten Zustand aufweist.

### Offenbarung der Erfindung

Diese Aufgabe wird durch die thermische Aktoranordnung gemäß Anspruch 1 sowie durch das Verfahren zum Betreiben der thermischen Aktoranordnung gemäß dem nebengeordneten Anspruch gelöst.

Weitere Ausgestaltungen sind in den abhängigen Ansprüchen angegeben.

Gemäß einem ersten Aspekt ist eine thermische Aktoranordnung zum Bewegen eines Stellelements zwischen einer ersten Stellposition und einer zweiten Stellposition vorgesehen, umfassend:
- einen ersten Teilaktor mit einem ersten thermischen Aktorelement, das mit einer ersten Gegenkraft beaufschlagt ist;
- einen zweiten Teilaktor mit einem zweiten thermischen Aktorelement, das mit einer zweiten Gegenkraft beaufschlagt ist, wobei die Aktorelemente ausgebildet sind, um durch eine Temperaturänderung ihre Form gegen die jeweilige Gegenkraft zu ändern;
- ein Stellelement, das mit dem ersten Teilaktor gekoppelt ist, so dass im deaktivierten Zustand des ersten Aktorelements das Stellelement in der ersten Stellposition bei Einwirken einer Haltekraft gehalten wird und bei Wegfall der Haltekraft das Stellelement aufgrund der Wirkung der ersten Gegenkraft in die zweite Stellposition gelangt;
- ein Sicherungselement, das mit dem zweiten Teilaktor gekoppelt ist, um im deaktivierten Zustand des zweiten Aktorelements die Haltekraft bereitzustellen und im aktivierten Zustand des zweiten Aktorelements die Haltekraft zu reduzieren oder zu eliminieren.

Die obige thermische Aktoranordnung weist einen ersten und einen zweiten Teilaktor auf. Die Teilaktoren sind jeweils mit einem thermischen Aktorelement und einem Federelement ausgebildet, die gegeneinander wirken. Die thermischen Aktorelemente sind durch Erwärmung verformbar und dadurch aktivierbar und nehmen durch Wirken der entsprechenden Gegenkraft des jeweiligen Teilaktors bei Abkühlung, wenn diese deaktiviert sind, ihre ursprüngliche Form wieder ein.

Die thermische Aktoranordnung weist ein bewegliches Stellelement auf, das zwischen einer ersten und einer zweiten Stellposition verfahrbar ist. Der erste Teilaktor ist so konfiguriert, dass dieser bei Wirken einer Haltekraft das Stellelement im nicht aktivierten Zustand in der ersten Stellposition hält und bei Nachlassen der Haltekraft das Stellelement in die zweite Stellposition verfährt, indem das erste thermische Aktorelement im nicht aktivierten Zustand durch die Gegenkraft verformt wird.

Der zweite Teilaktor dient dazu, die Haltekraft im nicht aktivierten Zustand auf den ersten Teilaktor auszuüben und, wenn das thermische Aktorelement des zweiten Teilaktors aktiviert wird, die Haltekraft zu reduzieren oder wegzunehmen. Durch Deaktivieren des thermischen Aktorelements kann die Haltekraft wieder an den ersten Teilaktor angelegt werden.

Die thermischen Aktorelemente können also so betrieben werden, dass durch Erwärmen des zweiten thermischen Aktorelements die Haltekraft weggenommen wird, so dass der Stellgeber von der ersten Stellposition zur zweiten Stellposition verfährt. Durch nachfolgendes Aktivieren des ersten thermoelastischen Aktorelements wird der Stellgeber von der zweiten Stellposition wieder zurück zu der ersten Stellposition bewegt.

Die thermischen Aktorelemente haben in der Regel eine schnelle Ansprechzeit bei deren Aktivierung, benötigen jedoch länger für das Rückstellen aufgrund der zur Abkühlung des entsprechenden thermischen Aktorelements benötigten Zeitdauer durch Konvektion. Daher kann durch die obige Anordnung erreicht werden, dass eine Verstellung der Stellpositionen von der ersten in die zweite Stellposition und von der zweiten in die erste Stellposition von der Abkühlzeitdauer der Aktorelemente unabhängig ist, da beide Stellbewegungen durch Aktivieren eines der Aktorelemente erreicht wird.

Durch Vorsehen mindestens eines Endanschlags für die erste Stellposition für die Bewegung des Stellelementes kann bei deaktiviertem Zustand beider thermischer Aktorelemente durch Vorsehen einer Gegenkraft oder einer Federkraft für die Gegenkraftbeaufschlagung des zweiten Federelements des zweiten Teilaktors, die höher ist als die erste Gegenkraft bzw. erste Federkraft, eine definierte Rückstellposition für den deaktivierten Zustand an der ersten Stellposition gewährleistet werden.

Aufgrund des geringen Bauraumbedarfs von thermischen Aktorelementen sowie von entsprechenden Federelementen können auf diese Weise Aktoranordnungen mit geringem Bauraumbedarf aufgebaut werden. Durch eine Längsanordnung der thermischen Aktorelemente sowie der Federelemente können insbesondere translatorische Aktoren in länglicher Bauform mit geringen Durchmessern realisiert werden.

Weiterhin können die thermischen Aktorelemente so ausgebildet sein, dass diese ihre Form bei Erwärmung ändern und bei Abkühlung, insbesondere durch Wirken der jeweiligen Gegenkraft ihre ursprüngliche Form wieder annehmen, wobei die Aktorelemente ein thermoelastisches Material, insbesondere eine Formgedächtnislegierung, ein Formgedächtnispolymer oder ein Bimetall umfassen.

Gemäß einer Ausführungsform kann das Stellelement beweglich gelagert sein und eine definierte erste Stellposition und/oder eine definierte zweite Stellposition aufweisen, die durch Anschlagseinrichtungen definiert sind.

Insbesondere kann die erste Stellposition durch eine erste Anschlagseinrichtung zwischen dem Sicherungselement und dem Stellelement in Verbindung mit einem ortsfesten Anschlag einer zweiten Anschlagseinrichtung des Sicherungselements und die zweite Stellposition durch einen ortsfesten Anschlag einer dritten Anschlagseinrichtung definiert sein.

Weiterhin kann die erste Gegenkraft geringer ausgelegt sein als die zweite Gegenkraft, wobei insbesondere ein erstes Federelement zum Bereitstellen einer ersten Federkraft als erste Gegenkraft eine geringere Federkonstante aufweist als ein zweites Federelement zum Bereitstellen einer zweiten Federkraft als zweite Gegenkraft.

Es kann vorgesehen sein, dass die erste Gegenkraft im deaktivierten Zustand des ersten Aktorelements dieses plastisch, quasiplastisch und/oder elastisch so verformt, dass das Stellelement in die zweite Stellposition gelangt.

Weiterhin kann das Stellelement translatorisch beweglich gelagert sein, wobei das Sicherungselement zwischen einer ersten Sicherungsposition und einer zweiten Sicherungsposition parallel zu dem Stellelement beweglich ist.

Es kann vorgesehen sein, dass zumindest das Stellelement rotatorisch beweglich gelagert ist, wobei insbesondere das Sicherungselement rotatorisch gelagert ist und zwischen einer ersten Sicherungsposition und einer zweiten Sicherungsposition koaxial zu dem Stellelement beweglich ist.

Insbesondere kann das erste Aktorelement zumindest teilweise durch einen Umfang des Rotorelements umgelenkt sein und/oder das zweite Aktorelement zumindest teilweise durch einen Umfang des Sicherungselements umgelenkt sein.

Weiterhin kann die jeweilige Gegenkraft durch mindestens eines der folgenden Elemente bereitgestellt sein: eine Druckfeder, eine Zugfeder, eine Torsionsfeder und eine Biegefeder.

Es kann vorgesehen sein, dass mindestens eines der Aktorelemente länglich ausgebildet ist und insbesondere drahtförmig oder stabförmig ist.

Gemäß einer Ausführungsform kann mindestens eines der Aktorelemente mit einer Energiezufuhr gekoppelt sein, um das jeweilige Aktorelement durch Zuführen elektrischer Leistung zu erwärmen.

Gemäß einer weiteren Ausführungsform kann ein bistabiles Element vorgesehen sein, dass so mit dem Stellelement gekoppelt ist, dass bei einem Verstellen des Stellelements das bistabile Element von einem in einen weiteren bistabilen Zustand wechselt.

Gemäß einem weiteren Aspekt ist ein Verfahren zum Betreiben der obigen thermischen Aktoranordnung vorgesehen, mit folgenden Schritten:
- Aktivieren des zweiten Aktorelements, um das Stellelement von der ersten Stellposition in die zweite Stellposition zu bewegen,
- Aktivieren des ersten Aktorelements, um das Stellelement von der zweiten Stellposition in die erste Stellposition zu bewegen.

### Kurzbeschreibung der Zeichnungen

Ausführungsformen werden nachfolgend anhand der beigefügten Zeichnungen näher erläutert. Es zeigen:
- Figuren 1a bis 1c: eine thermische Aktoranordnung gemäß einer ersten Ausführungsform in verschiedenen Schaltzuständen;
- Figur 2: eine Realisierung der thermischen Aktoranordnung der Figuren 1a bis 1c als Ventilaktor;
- Figuren 3a bis 3c: weitere Ausführungsformen einer translatorischen thermischen Aktoranordnung unter Verwendung von Zugfedern;
- Figur 4: eine Veranschaulichung einer rotatorischen thermischen Aktoranordnung gemäß einer weiteren Ausführungsform;
- Figur 5: eine Veranschaulichung einer rotatorischen thermischen Aktoranordnung gemäß einer weiteren Ausführungsform;
- Figur 6: eine perspektivische Darstellung einer rotatorischen thermischen Aktoranordnung gemäß einer weiteren Ausführungsform;
- Figur 7: eine Anordnung mit der Aktoranordnung und mit einem bistabilen Element; und
- Figur 8: eine weitere Anordnung mit der Aktoranordnung und mit einem bistabilen Element.

### Beschreibung von Ausführungsformen

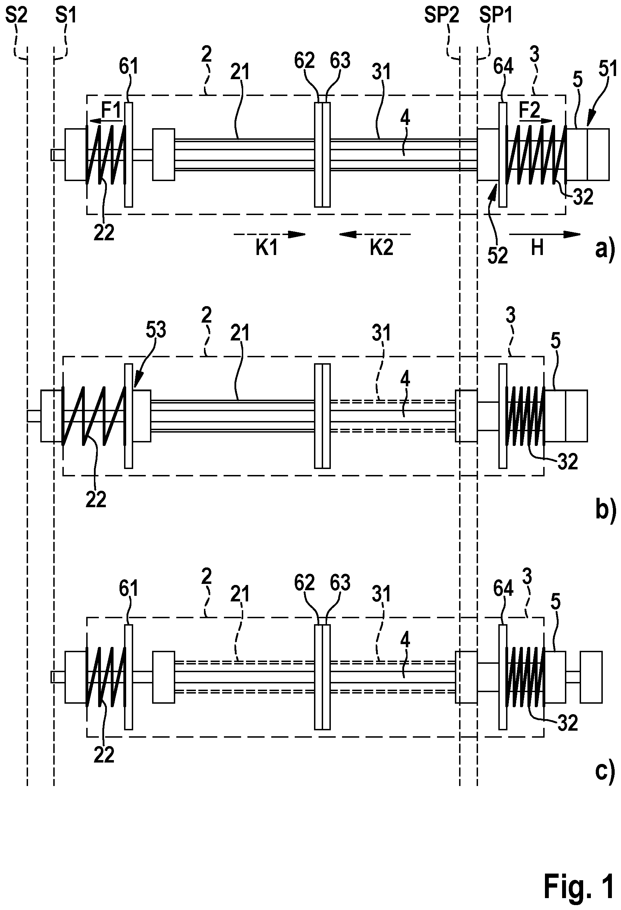

Figuren 1a bis 1c zeigen verschiedene Zustände einer translatorischen thermischen Aktoranordnung 1 gemäß einer ersten Ausführungsform. In Figur 1a ist die thermische Aktoranordnung 1 in einer Ruheposition dargestellt.

Die thermische Aktoranordnung 1 weist einen ersten Teilaktor 2 und einen zweiten Teilaktor 3 auf. Der erste Teilaktor 2 wirkt auf ein Stellelement 4, das translatorisch verschiebbar gehalten ist und mit dem ersten und dem zweiten Teilaktor 2, 3 gekoppelt ist. Das Stellelement 4 ist zwischen einer ersten Stellposition S1 und einer zweiten Stellposition S2 verstellbar. Eine Kraftrichtung, die in Richtung der ersten Stellposition S1 wirkt, wird als erste Kraftrichtung K1, und eine Kraftrichtung, die in Richtung der zweiten Stellposition S2 wirkt, wird als zweite Kraftrichtung K2 bezeichnet.

Der erste Teilaktor 2 weist ein erstes thermisches Aktorelement 21 und der zweite Teilaktor 3 ein zweites thermisches Aktorelement 31 auf. Die Aktorelemente 21, 31 sind so ausgebildet, dass diese ihre Form bei Erwärmung ändern und bei Abkühlung ihre ursprüngliche Form wieder annehmen. Insbesondere nutzt die beschriebene Ausführungsform eine Kontraktion der Aktorelemente 21, 31 bei deren Erwärmung und eine quasiplastische Ausdehnung bei deren Abkühlung und bei Einwirken einer Gegenkraft.

Das erste und/oder zweite thermische Aktorelement 21, 31 kann beispielsweise mit einem thermoelastischen Material, wie z.B. einer Formgedächtsnislegierung, ausgebildet sein, wie beispielsweise einem thermoelastischen Draht, einer thermoelastischen Feder oder einem sonstigen thermoelastischen Element. Andere thermische Aktorelemente können beispielsweise Formgedächtnispolymere, Bimetalle oder sonstige Dehnstoffelemente als aktive Materialien umfassen.

Der erste Teilaktor 2 weist das erste thermische Aktorelement 21 auf, das in einem deaktivierten Zustand das Stellelement 4 gegen eine erste Federkraft F1 (Gegenkraft) und bei Wirken einer vorgegebenen Haltekraft H in der ersten Kraftrichtung K1 in der ersten Stellposition S1 hält. Der deaktivierte Zustand des Aktorelements liegt beispielsweise bei Umgebungstemperatur vor. Der aktivierte Zustand wird bei einer darüberhinaus erwärmten Temperatur des Aktorelements eingenommen. Die erste Federkraft F1 kann in der dargestellten Ausführungsform durch ein erstes Federelement 22 bereitgestellt werden, das als Druckfeder ausgebildet ist. Das erste Aktorelement 21 kann dazu zwischen einem zweiten ortsfesten Halteelement 62 und dem Stellelement 4 angeordnet und wirksam sein.

Das erste Federelement 22, das als Druckfeder ausgebildet sein kann, stützt sich an einem Ende an einem ersten ortsfesten Halteelement 61 ab und übt die erste Federkraft F1 in der zweiten Kraftrichtung K2 auf das Stellelement 4 aus, so dass das erste thermische Aktorelement 21 auf Zug belastet wird. Das erste thermische Aktorelement 21 und das erste Federelement 22 sind so ausgelegt, dass ohne Einwirkung der weiteren Haltekraft das Stellelement 4 nicht in der ersten Stellposition S1 gehalten werden kann. Das heißt, die Zugkraft, die durch das erste Federelement 22 auf das erste Aktorelement 21 ausgeübt wird, reicht nicht aus, um das erste Aktorelement 21 in einem Maße zu dehnen, dass das Stellelement 4 aus der ersten Stellposition S1 bewegt wird, solange die zusätzliche Haltekraft H wirkt.

Die Haltekraft H in der ersten Kraftrichtung K1 wird durch den zweiten Teilaktor 3 bereitgestellt. Der zweite Teilaktor 3 ist mit einem zweiten thermischen Aktorelement 31 und einem zweiten Federelement 32 ausgebildet. Das zweite Federelement 32 und das zweite thermische Aktorelement 31 wirken auf ein Sicherungselement 5. Das Sicherungselement 5 ist verschieblich an dem Stellelement 4 angeordnet und kann durch das zweite Aktorelement 31 zwischen einer ersten Sicherungsposition SP1 und einer zweiten Sicherungsposition SP2 verstellt werden. Zwischen dem Stellelement 4 und dem Sicherungselement 5 ist eine Anschlagseinrichtung 51 vorgesehen, die in einer ersten Sicherungsposition SP1 die Haltekraft H über das Stellelement 4 auf den ersten Teilaktor 2 ausübt und so das Stellelement 4 an der ersten Stellposition S1 hält. Insbesondere wird die Haltekraft H in der ersten Kraftrichtung K1 gegen die erste Federkraft F1 des ersten Federelements 22 ausgeübt wird. Die Federkonstante der zweiten Federelements 32 ist entsprechend so dimensioniert, dass es die Haltekraft H auch gegen die erste Federkraft F1 des ersten Federelements 21 ausüben kann.

Anschlagseinrichtungen im Sinne dieser Erfindung werden durch zwei gegeneinander bewegliche Elemente gebildet, die dadurch bei einer Bewegung gegeneinander einen ortsfesten oder beweglichen Anschlag ausbilden.

Das zweite Federelement 32 wirkt so auf das zweite Aktorelement 31, dass dieses mit einer Zugspannung beaufschlagt ist. Das zweite Aktorelement 31 ist zwischen einem dritten ortsfesten Halteelement 63 und dem Sicherungselement 5 angeordnet. Das zweite Federelement 32 ist zwischen einem vierten ortsfesten Halteelement 64 und dem Sicherungselement 5 angeordnet. Das zweite Federelement 32 ist im gezeigten Ausführungsbeispiel als Druckfeder ausgebildet und drückt das Sicherungselement 5 in erster Kraftrichtung K1 gegen die erste Anschlagseinrichtung 51, so dass im deaktivierten Zustand des zweiten Aktorelements 31 das Sicherungselement 5 an der vorgegebenen ersten Sicherungsposition SP1 gehalten ist.

Durch eine ortsfeste zweite Anschlagseinrichtung 52, die beispielsweise an dem vierten ortsfesten Halteelement 64 vorgesehen sein kann, kann die erste Sicherungsposition SP1 und damit auch die erste Stellposition S1 des Stellelements 4 festgelegt werden. Die zweite Anschlagseinrichtung 52 zwischen dem Sicherungselement 5 und einem vierten ortsfesten Halteelement 64 bewirkt bei einer Bewegung des Sicherungselements 5 in erster Kraftrichtung K1, dass die Bewegung des Stellelements 4 an der ersten Sicherungsposition SP1 blockiert wird und dieses dort gehalten wird und dadurch die erste Stellposition S1 aufgrund der ersten Anschlagseinrichtung 51 zwischen dem Stellelement 4 und dem Sicherungselement 5 definiert. Das Sicherungselement 5 und das Stellelement 4 sind also so miteinander gekoppelt, dass eine Bewegung des Sicherungselements 5 in der ersten Kraftrichtung K1 durch die zweite Anschlagseinrichtung 52 und eine Bewegung des Stellelements 4 in der zweiten Kraftrichtung K2 durch die erste Anschlageinrichtung 51 begrenzt ist.

In der in Figur 1a gezeigten Aktoranordnung 1 wird damit das Stellelement 4 durch das Sicherungselement 5 in der ersten Stellposition S1 gehalten, wenn beide Aktorelemente 21, 31 deaktiviert sind. Wird nun das zweite Aktorelement 31 aktiviert, wie es in Verbindung mit Figur 1b dargestellt ist, so verringert sich die Ausdehnung des zweiten Aktorelements 31, und eine Zugkraft wird auf das Sicherungselement 5 in der zweiten Kraftrichtung K2 ausgeübt.

Das Aktivieren der Aktorelemente 21, 31 kann durch Beaufschlagen mit elektrischer Energie erreicht werden. Dazu können beispielsweise gegenüberliegende Enden der drahtförmigen bzw. länglichen Aktorelemente 21, 31 mit Kontakten versehen sein, um die Aktorelemente schaltbar mithilfe elektrischer Energie zu erwärmen.

Ausüben der Zugkraft auf das Sicherungselement 5 in der zweiten Kraftrichtung K2 führt zur Reduzierung oder zum Wegfall der Haltekraft H und aufgrund der Wirkung der ersten Federkraft F1 des ersten Federelements 22 dazu, dass sich das Stellelement 4 mit dem Sicherungselement 5 in die zweite Kraftrichtung K2 bewegt und somit das Stellelement 4 in die zweite Stellposition S2 gelangt. Die zweite Stellposition kann durch eine dritte Anschlagseinrichtung 53 zwischen dem Stellelement 4 und einem geeigneten Halteelement, insbesondere dem ersten Halteelement 61, festgelegt sein. Alternativ kann die zweite Stellposition S2 auch durch die erste Anschlagseinrichtung 51 bestimmt sein, wenn sich das Sicherungselement 5 in der zweiten Sicherungsposition befindet.

Die zweite Stellposition S2 kann alternativ durch die Länge bzw. Ausdehnung des zweiten Aktorelements 31 im aktivierten Zustand definiert sein, das über den Verstellweg des Sicherungselements 5 in die zweite Kraftrichtung K2 die zweite Sicherungsposition SP2 definiert.

Durch das Aktivieren des zweiten Aktorelements 31 wird die durch das zweite Federelement 32 bewirkte Haltekraft H reduziert bzw. vollständig eliminiert, und das erste Federelement 22 kann die vollständige erste Federkraft F1 auf das erste Aktorelement 21 ausüben, wodurch dieses gedehnt wird und das Stellelement 4 in Richtung der zweiten Stellposition bewegt. Daher ist eine Dimensionierung zwischen der Federkonstanten des ersten Federelements 22 und der Elastizität des ersten Aktorelements 21 vorgesehen, die eine Dehnung des ersten Aktorelements 21 von der ersten Stellposition (im wesentlichen unbelasteten Zustand des ersten Aktorelements) zu der zweiten Stellposition S2 durch die erste Federkraft F1 des ersten Federelements 22 ermöglicht.

Ein Rückstellen von der zweiten Stellposition S2 zu der ersten Stellposition S1 ist im Folgenden durch einfaches Deaktivieren des zweiten Aktorelements 31 möglich, jedoch erfolgt das Rückstellen in der Regel mit einer unbestimmten längeren Zeitdauer, da das zweite Aktorelement 31 sich dazu abkühlen muss, um insbesondere in Verbindung mit der wirkenden zweiten Gegenkraft die entsprechende Formänderung hervorzurufen. Die Abkühlungsgeschwindigkeit ist dabei lediglich durch die Wärmeabgabe in die Umgebung bestimmt, sofern keine gesonderten Kühlmaßnahmen vorgesehen sind. Die Abkühlung erfolgt in der Regel langsamer als das Erwärmen, da die Leistungszufuhr für das Erwärmen beispielsweise durch elektrische Energie im Wesentlichen nur durch die Höhe der bereitgestellten Leistung beschränkt ist.

Um das Stellelement 4 der thermischen Aktoranordnung 1 jedoch schneller von der zweiten Stellposition S2 in die erste Stellposition S1 zu bewegen, ist eine Aktivierung des ersten thermischen Aktorelements 21 bei gleichzeitig aktivierten zweiten Aktorelement 31 vorgesehen. Der dadurch erreichte Zustand ist in Figur 1c dargestellt. Dies bewirkt, dass das Stellelement 4 aktiv gegen die erste Federkraft F1 des ersten Federelements 22 in die erste Stellposition S1 zurückbewegt wird, ohne dass hierfür notwendigerweise die Haltekraft H in erster Kraftrichtung K1 auf das Stellelement 4 wirkt und ohne dass eine zusätzliche Kraft auf das zweite Aktorelement 31 ausgeübt wird. Dadurch wird eine Verformung der Aktorelemente im aktivierten Zustand vermieden.

Da das Aktivieren eines Aktorelements durch Erwärmen erheblich schneller zu einer entsprechenden Verformung bzw. Längenänderung führt, als dies bei einem Deaktivieren durch Abkühlung und Wirken einer Gegenkraft der Fall ist, kann ein Rückstellen von der zweiten Stellposition S2 in die erste Stellposition S1 erheblich schneller vorgenommen werden. Durch Deaktivieren des zweiten Aktorelements 31 und folgendes Deaktivieren des ersten Aktorelements kann die Aktoranordnung 1 ausgehend von dem Zustand der Figur 1c in die Ausgangsposition der Figur 1a zurückgeführt werden.

Alternativ kann gleichzeitig mit der Aktivierung des ersten Aktorelements 21 ausgehend von dem Zustand, der in Figur 1b gezeigt ist, das zweite Aktorelement 31 deaktiviert werden, um den Abkühlungsvorgang bereits bei Beginn des Rückstellvorgangs zu starten. Dies ermöglicht die Reduzierung einer Totzeit bis zu einer erneuten Bereitschaft zur Aktivierung des zweiten Teilaktors 3, dessen Zustand in Figur 1a dargestellt ist.

Im deaktivierten Zustand beider Aktorelemente 21, 31 kann eine Auslegung der Federelemente 22, 32 mit unterschiedlichen Federkräften dazu führen, dass bei deaktiviertem, d. h. unbestromtem Zustand der Aktoranordnung 1 eine vorgegebene Stellposition, insbesondere die erste Stellposition, erreicht werden kann. Insbesondere wird die zweite Federkraft des zweiten Federelements 32 bei einer Stellung die der ersten Stellposition S1 entspricht, höher gewählt als die Federkraft des ersten Federelements 22 an diesem Arbeitspunkt, so dass bei deaktiviertem Zustand beider Aktorelemente 21, 31 das Sicherungselement 5 in die erste Sicherungsposition SP1 verfahren wird und aufgrund der ersten und der zweiten Anschlagseinrichtung 51, 52 das Stellelement 4 entsprechend in die erste Stellposition S1 gebracht wird.

Durch Verstellen der Länge des Stellelements 4 im Bereich der ersten Anschlagseinrichtung 51 und/oder Verstellen der zweiten Anschlagseinrichtung 52 kann eine Verstellbarkeit der Stellpositionen S1, S2 realisiert werden.

Die oben beschriebene Aktoranordnung 1 kann als Aktor für eine Vielzahl von Stellgebern verwendet werden, die insbesondere eine Verstellung zwischen zwei definierten Stellpositionen ermöglichen sollen. Beispielsweise kann die Aktoranordnung als Ventilaktoren, Verriegelungsaktoren, Entriegelungsaktoren, Positionieraktoren, Bremsaktoren, (Kontakt)Schalter und dergleichen verwendet werden.

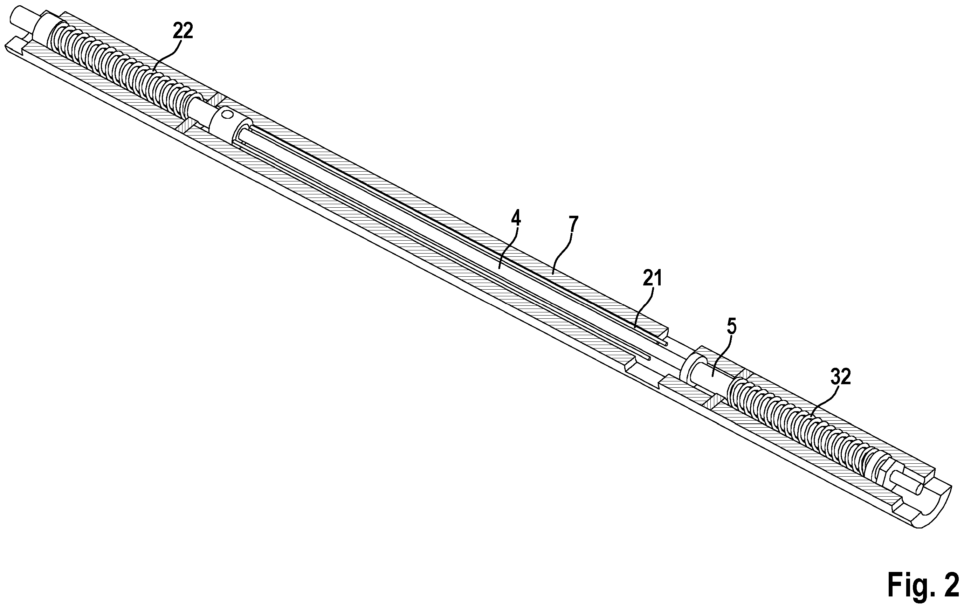

Die in den Figuren 1a bis 1c dargestellte translatorische thermische Aktoranordnung kann beispielsweise in einem Ventilaktor, wie er beispielhaft in Figur 2 in einer Schnittdarstellung dargestellt ist, verwendet werden.

Die Anordnung der Figur 2 zeigt ein Aktorgehäuse 7, das im Wesentlichen rohrförmig ausgebildet ist. In dem Aktorgehäuse 7 ist die Aktoranordnung 1 angeordnet, die beispielsweise in Verbindung mit den Figuren 1a-1c beschrieben ist. Durch die längliche Anordnung der Federelemente und der Aktorelemente eine Realisierung in einer stabähnlichen Anordnung mit geringem Durchmesser realisiert werden kann. Die Anordnung hat den Vorteil, dass Federelemente und Aktorelemente in Längsrichtung benachbart angeordnet werden können, so dass die längliche Anordnung mit besonders kleinen Durchmessern aufgebaut werden kann. Zudem können das erste und das zweite Aktorelement bezüglich der Umfangsrichtung versetzt zueinander, insbesondere um 90° versetzt angeordnet sind, so dass diese gemeinsam in einem Abschnitt der Aktoranordnung angeordnet sind

Die Stellbewegung einer solchen Aktoranordnung erfolgt durch das in dem Aktorgehäuse 7 angeordnete Stellelement 4 durch eine Stellbewegung, die an einem Ende der stabförmigen Aktoranordnung abgegriffen werden kann, so dass dort ein entsprechendes Stellsystem, wie beispielsweise ein Ventil oder dergleichen, gestellt werden kann.

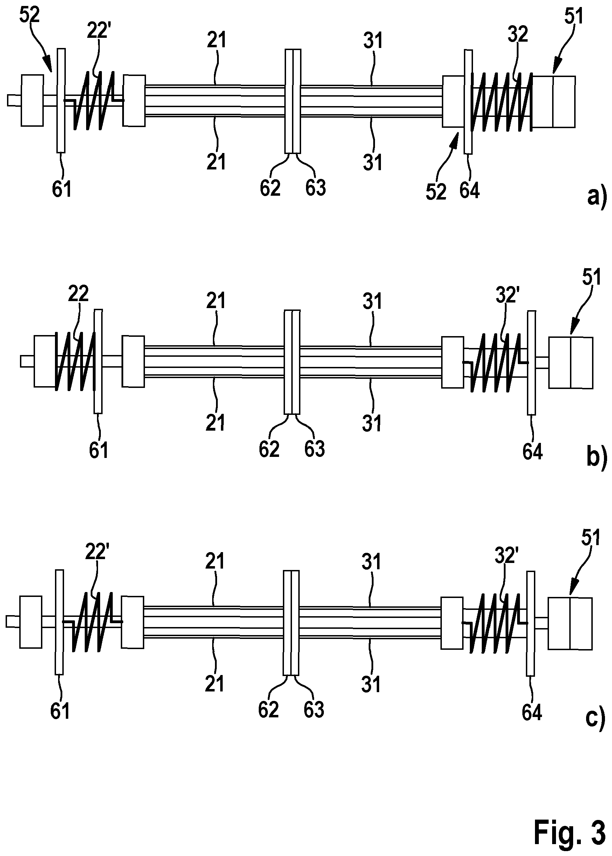

In den Figuren 3a bis 3c sind als weitere Ausführungsformen translatorische Aktoranordnungen dargestellt, bei denen anstelle der Druckfeder als erstes Federelement 22 eine Zugfeder 22' (Figur 3a), anstelle des zweiten Federelements 32 eine Zugfeder 32` (Figur 3b) bzw. anstelle beider Federelemente 22, 32 Zugfedern 22', 32` (Fig. 3c) vorgesehen sind. Insgesamt sind für die translatorische Anordnung die Teilaktuatoren 2, 3 so ausgebildet, dass eine jeweilige Federkraft in Richtung einer Dehnung des ersten und zweiten thermischen Aktorelements 21, 31 wirkt bzw. eine Federkraft entgegen einer Richtung einer Formänderung des Aktorelements 21, 31 bei thermischer Beaufschlagung wirkt.

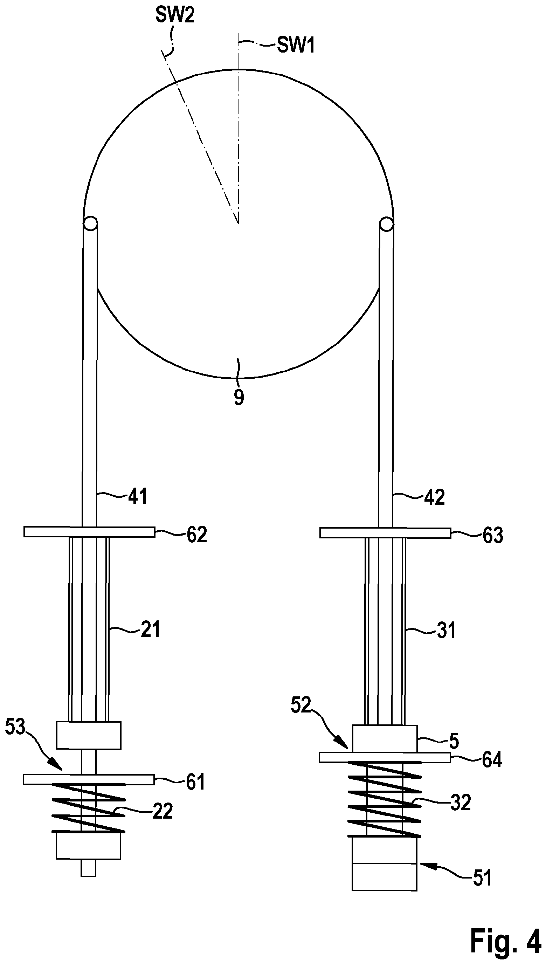

Die Ausführungsform der Figur 4 zeigt die Anwendung des Aktorprinzips der Figuren 1a-1c auf eine rotatorische Aktoranordnung. Bei dieser wird das starre Stellelement 4 in Stellelementteile 41, 42 unterteilt, die drehbeweglich gelagert an einem Stellmittenteil 9 an einander gegenüberliegenden Befestigungspunkten angebracht sind. Das Stellmittenteil 9 nimmt je nach Stellung der Stellelementteile 41, 42 einen ersten oder zweiten Stellungswinkel SW1, SW2 als Stellpositionen ein. Das Grundprinzip entspricht dem Grundprinzip der in Figuren 1a-1c dargestellten Anordnung und ist anwendbar, da die Kraftübertragung über das Stellmittenteil 9 auf die Stellelementteile 41, 42 in gleicher Weise wie in der ersten Ausführungsform erfolgt. Die ersten und zweiten Federelemente 22, 32 können, wie in den Figuren 3a bis 3c dargestellt, als Druck- und/oder Zugfedern ausgebildet sein, wobei das Grundprinzip, dass die Federkraft/Gegenkraft das betreffende thermische Aktorelement 21, 31 jeweils in Dehnungsrichtung beaufschlagt, beibehalten wird.

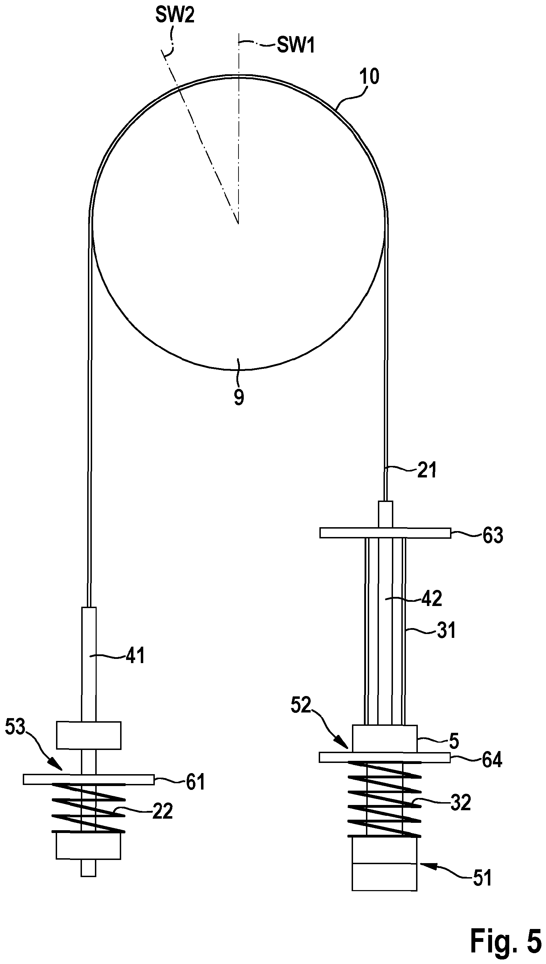

In Figur 5 ist die Anwendung des Aktorprinzips auf eine weitere rotatorische Aktoranordnung gezeigt, bei der das starre Stellelement 4 durch ein Seil 10 ersetzt wird, das die Stellelementteile 41, 42 miteinander verbindet und das über eine Umfangsfläche des drehbeweglich gelagerten Stellmittenteil 9 geführt ist. Das Seil 10 ist von dem ersten Stellelementteil 41 über das Stellmittenteil 9 geführt. Zwischen einem Ende des Seils 10 und dem zweiten Stellelementteil 42 ist das erste Aktorelement 21 angeordnet. Das Wirkprinzip entspricht dadurch dem Wirkprinzip der translatorischen Aktoranordnung.

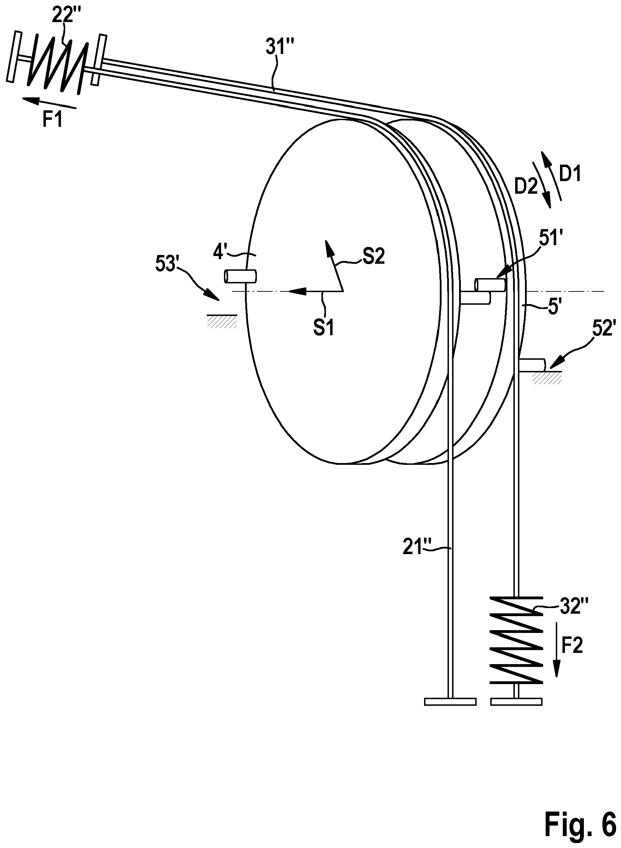

Die Ausführungsform der Figur 6 zeigt eine Ausführung bei das Stellelement 4` und das Sicherungselement 5` als koaxial bewegliche rotatorische Scheibenelemente 4`,5` ausgebildet sind. Entsprechend sind die erste, zweite und dritte Anschlagseinrichtung 51', 52', 53` so an dem scheibenförmigen Stellelement 4` und dem scheibenförmigen Sicherungselement 5` angeordnet, dass diese in zu der in den Figuren 1a - 1c beschriebenen Ausführungsform vergleichbaren Weise vorgegebene Stellpositionen S1, S2 bzw. Sicherungspositionen SP1, SP2 definieren.

Die Aktorelemente 21", 31", die insbesondere drahtförmig ausgebildet sein können, wirken dann zum Ausüben eines Drehmoments auf das Stellelement 4` bzw. das Sicherungselement 5`. Die Aktorelemente 21", 31" können dann auch teilweise an einer Umfangsfläche des jeweiligen Scheibenelements entlanglaufen und dieses bei Kontraktion oder Dehnung mitnehmen bzw. rotieren. Die jeweilige Gegenkraft kann durch eine entsprechende Zugfeder an einem Ende des jeweiligen Aktorelements 21", 31" oder als in den Scheibenelementen angeordnete Torsionsfeder bewirkt werden. Anstelle einer Feder kann die Gegenkraft für das jeweilige Aktorelement auch eine durch Schwerkraft beaufschlagte Masse erreicht werden.

Insbesondere sind das Stellelement 4` und das Sicherungselement 5` bei einer Drehung gegeneinander so über die erste Anschlagseinrichtung 51' gekoppelt, dass das Sicherungselement 5` das Stellelement 4` in der ersten Stellposition S1 hält, wenn beide Aktorelemente 21", 31" deaktiviert sind, und das Sicherungselement 5' bei Aktivieren des zweiten Aktorelements 31" die Rotation des Stellelements 4` freigibt, so dass sich dieses gegen die erste Federkraft F1 des ersten Federelements 22" in die zweite Stellposition S2 bewegt. Bei Aktivieren des zweiten Aktorelements 31" wird das Sicherungselement 5` in eine erste Drehrichtung D2 bewegt, so dass dieses aufgrund der Wegfalls des Anschlags der ersten Anschlagseinrichtung 51' das Stellelement 4` durch Wirken der ersten Federkraft F1 des ersten Federelements 22" ebenfalls in die erste Drehrichtung D2 mitnimmt.

Die Federelemente 22", 32" sowie die Aktorelemente 21", 31" können als Torsionsfederelemente bzw. Torsionsaktorelemente ausgebildet und in dem Sicherungselement 5` bzw. Stellelement 4` angeordnet sein.

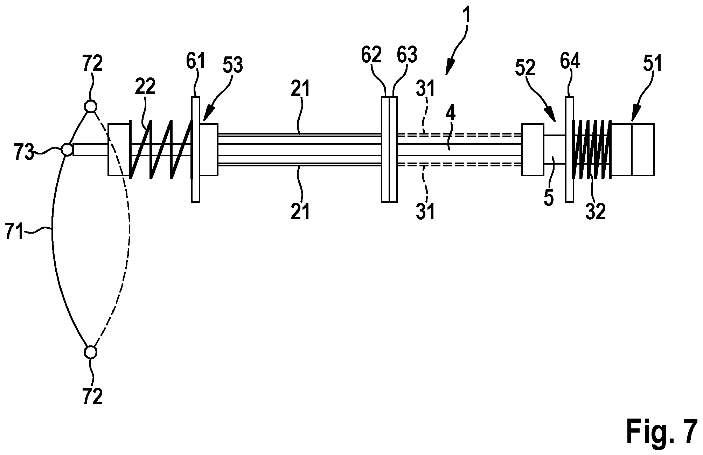

In der Ausführungsform der Figur 7 ist die Kombination der Aktoranordnung der Figuren 1a-1c mit einem bistabilen Element 71 dargestellt. Bistabile Elemente, auch Schnappelement oder Schnappfedern genannt, können durch Beaufschlagen mit einer Stellkraft zwischen zwei stabilen Stellzuständen verstellt werden, in denen sie jeweils bis zum Beaufschlagen mit einer entsprechenden Verstellkraft verbleiben. Das in Figur 7 dargestellte bistabile Element 71 kann ein elastisches Metallblättchen aufweisen, das unter einer Biegespannung fest zwischen zwei Haltestellen 72 eingespannt ist. Das bistabile Element 71 ist an den Haltestellen 72 drehbeweglich angeordnet, sodass dieses zwischen zwei bistabilen Stellungen verstellt werden kann. Durch Kopplung der Aktoranordnung 1 an einer Beaufschlagungsstelle 73 kann das bistable Element 71 verstellt werden, ohne dass die Rückstellzeit von einer Abkühlungsgeschwindigkeit abhängt. Zudem muss beim Rückstellen auch keine Kraft gegen einen aktivierten Zustand eines der Aktorelemente ausgeübt werden, so dass keine Dehnung des Aktorelements im aktivierten Zustand erfolgt.

Die Beaufschlagungsstelle 73 wird vorzugsweise nahe einer Haltestelle 72 vorgesehen, so dass ein Verstellen des bistabilen Elements mit einem geringen Stellweg möglich ist. Durch Kopplung mit einer externen Vorrichtung in einer Mittenposition des bistabilen Elements kann eine Stellwegverlängerung in einfacher Weise erreicht werden.

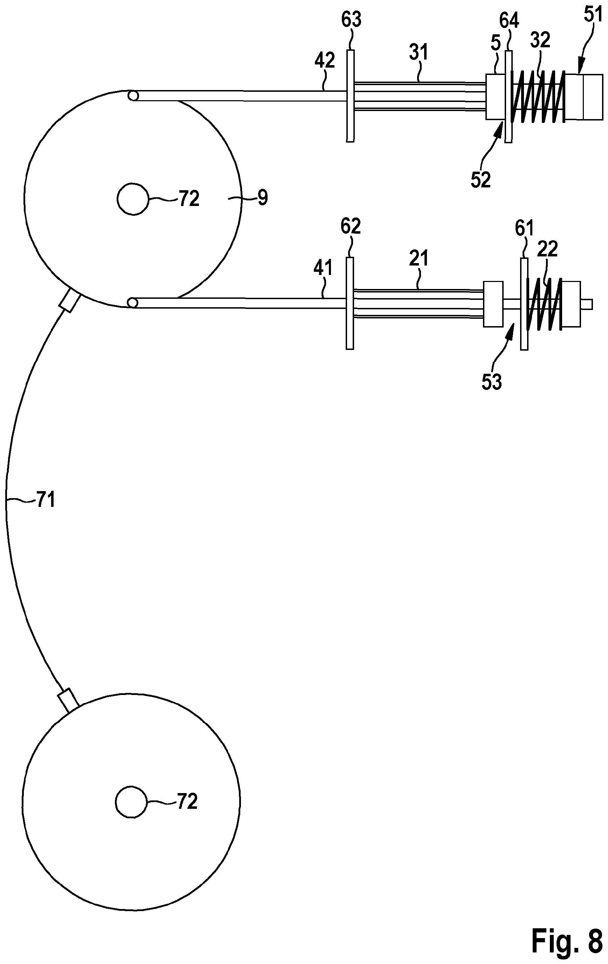

In Figur 8 ist eine weitere Ausführungsform mit einer rotatorischen Aktoranordnung, wie sie beispielsweise in einer der Ausführungsformen der Figuren 4, 5 und 6 dargestellt ist, und dem bistabilen Element 71 gezeigt, das zwischen zwei Haltestellen 72 drehbeweglich angeordnet ist. Durch Ausüben eines Stellmoments über eine der Haltestellen 72 auf das bistabile Element 71 mithilfe der Aktoranordnung 1 kann das bistabile Element 71 entsprechend in eine der bistabilen Stellungen verstellt werden.

## Patentansprüche

1. Thermische Aktoranordnung (1) zum Bewegen eines Stellelements (4) zwischen einer ersten Stellposition (S1) und einer zweiten Stellposition (S2) umfassend:
- einen ersten Teilaktor (2) mit einem ersten thermischen Aktorelement (21), das mit einer ersten Gegenkraft (F1) beaufschlagt ist;
- einen zweiten Teilaktor (3) mit einem zweiten thermischen Aktorelement (31), das mit einer zweiten Gegenkraft (F2) beaufschlagt ist, wobei die Aktorelemente (21, 31) ausgebildet sind, um durch eine Temperaturänderung ihre Form gegen die jeweilige Gegenkraft (F1, F2) zu ändern;
- ein Stellelement (4), das mit dem ersten Teilaktor (2) gekoppelt ist, so dass im deaktivierten Zustand des ersten Aktorelements (21) das Stellelement (4) in der ersten Stellposition (S1) bei Einwirken einer Haltekraft (H) gehalten wird und bei Wegfall der Haltekraft (H) das Stellelement (4) aufgrund der Wirkung der ersten Gegenkraft (F1) in die zweite Stellposition (S2) gelangt;
- ein Sicherungselement (5), das mit dem zweiten Teilaktor (3) gekoppelt ist, um im deaktivierten Zustand des zweiten Aktorelements (31) die Haltekraft (H) bereitzustellen und im aktivierten Zustand des zweiten Aktorelements (31) die Haltekraft (H) zu reduzieren oder zu eliminieren.

2. Thermische Aktoranordnung (1) nach Anspruch 1, wobei die thermischen Aktorelemente (21, 31) so ausgebildet sind, dass diese ihre Form bei Erwärmung ändern, insbesondere kontrahieren, und bei Abkühlung, insbesondere durch Wirken der entsprechenden Gegenkraft, ihre ursprüngliche Form wieder annehmen, wobei die Aktorelemente (21, 31) ein thermoelastisches Material, insbesondere eine Formgedächtnislegierung, ein Formgedächtnispolymer oder ein Bimetall umfassen.

3. Thermische Aktoranordnung (1) nach Anspruch 1 oder 2, wobei das Stellelement (4) beweglich gelagert ist und eine definierte erste Stellposition (S1) und/oder eine definierte zweite Stellposition (S2) aufweist, die durch entsprechende Anschlagseinrichtungen (51, 52, 53) definiert sind.

4. Thermische Aktoranordnung (1) nach Anspruch 3, wobei die erste Stellposition (S1) durch eine erste Anschlagseinrichtung (51) zwischen dem Sicherungselement (5) und dem Stellelement (4) in Verbindung mit einem ortsfesten Anschlag einer zweiten Anschlagseinrichtung (52) des Sicherungselements (5) und/oder die zweite Stellposition (S2) durch einen ortsfesten Anschlag einer dritten Anschlagseinrichtung (53) definiert sind.

5. Thermische Aktoranordnung (1) nach einem der Ansprüche 1 bis 4, wobei die erste Gegenkraft (F1) geringer ausgelegt ist als die zweite Gegenkraft (F2), wobei insbesondere ein erstes Federelement (22) zum Bereitstellen einer ersten Federkraft (F1) als erste Gegenkraft eine geringere Federkraft aufweist als ein zweites Federelement (32) zum Bereitstellen einer zweiten Federkraft (F2) als zweite Gegenkraft.

6. Thermische Aktoranordnung (1) nach einem der Ansprüche 1 bis 5, wobei die erste Gegenkraft (F1) so ausgelegt ist, dass diese das erste Aktorelement (21) bei dessen deaktiviertem Zustand plastisch, quasiplastisch und/oder elastisch so verformt, dass das Stellelement (4) in die zweite Stellposition (S2) gelangt, wobei insbesondere das Stellelement (4) durch die erste Gegenkraft (F1) in die zweite Stellposition (S2) bewegt wird.

7. Thermische Aktoranordnung (1) nach einem der Ansprüche 1 bis 6, wobei das Stellelement (4) translatorisch beweglich gelagert ist, wobei das Sicherungselement (5) zwischen einer ersten Sicherungsposition (SP1) und einer zweiten Sicherungsposition (SP2) parallel zu dem Stellelement (4) beweglich ist.

8. Thermische Aktoranordnung (1) nach einem der Ansprüche 1 bis 7, wobei zumindest ein Rotorteil des Stellelements (4) rotatorisch beweglich gelagert ist, wobei das Sicherungselement (5) rotatorisch gelagert ist und zwischen einer ersten Sicherungsposition (SP1) und einer zweiten Sicherungsposition (SP2) koaxial zu dem Stellelement (4) beweglich ist.

9. Thermische Aktoranordnung (1) nach Anspruch 8, wobei das erste Aktorelement (21) zumindest teilweise um eine Umfangsfläche des Stellelements (4) umgelenkt ist und/oder das zweite Aktorelement (31) zumindest teilweise um eine Umfangsfläche des Sicherungselements (5) umgelenkt ist.

10. Thermische Aktoranordnung (1) nach einem der Ansprüche 1 bis 9, wobei die jeweilige Gegenkraft (F1, F2) durch mindestens eines der folgenden Elemente bereitgestellt ist: eine Druckfeder, eine Zugfeder, eine Torsionsfeder, eine Biegefeder oder ein mit Schwerkraft beaufschlagtes Masseelement.

11. Thermische Aktoranordnung (1) nach einem der Ansprüche 1 bis 10, wobei mindestens eines der Aktorelemente (21, 31) länglich und elastisch ausgebildet ist und insbesondere drahtförmig oder stabförmig ist.

12. Thermische Aktoranordnung (1) nach einem der Ansprüche 1 bis 11, wobei mindestens eines der Aktorelemente (21, 31) mit einer Energiezufuhr gekoppelt ist, um das jeweilige Aktorelement (21, 31) durch Zuführen elektrischer Leistung zu erwärmen.

13. Thermische Aktoranordnung (1) nach einem der Ansprüche 1 bis 12, wobei ein bistabiles Element (71) vorgesehen ist, dass so mit dem Stellelement (4) gekoppelt ist, dass bei einem Verstellen des Stellelements (4) das bistabile Element von einem in einen weiteren bistabilen Zustand wechselt, wobei insbesondere das Stellelement (4) mit dem bistabilen Element (71) gekoppelt ist, um eine translatorische oder rotatorische Verstellung auf das bistabile Element auszuüben.

14. Thermische Aktoranordnung (1) nach einem der Ansprüche 1 bis 13, wobei das Stellelement (4) mit einem Ventilaktor, einem Verriegelungsaktor, einem Entriegelungsaktor, einem Positionieraktor, einem Bremsaktor oder einem (Kontakt)Schalter zur Verstellung gekoppelt ist.

15. Verfahren zum Betreiben einer thermischen Aktoranordnung (1) nach einem der Ansprüche 1 bis 13, mit folgenden Schritten:
- Aktivieren des zweiten Aktorelements (31), um das Stellelement (4) von der ersten Stellposition (S1) in die zweite Stellposition (S2) zu bewegen,
- Aktivieren des ersten Aktorelements (21), um das Stellelement (4) von der zweiten Stellposition (S1) in die erste Stellposition (S2) zu bewegen.

## Claims

1. Thermal actuator arrangement (1) for moving an actuator (4) between a first actuating position (S1) and a second actuating position (S2), comprising:
- a first partial actuator (2) having a first thermal actuator element (21), to which a first opposing force (F1) is applied;
- a second partial actuator (3) having a second thermal actuator element (31) to which a second opposing force (F2) is applied, wherein the actuator elements (21, 31) are configured to modify their shape against the opposing force (F1, F2) in each case due to the effect of a temperature change;
- an actuator (4), which is coupled to the first partial actuator (2), such that, when the first actuator element (21) is deactivated, the actuator (4) is held in the first actuating position (S1) when a holding force (H) takes effect and, when the holding force (H) is eliminated, the actuator (4) moves to the second actuating position (S2) due to the effect of the first opposing force (F1);
- a securing element (5), which is coupled to the second partial actuator (3) in order to provide the holding force (H) when the second actuator element (31) is in the deactivated state and to reduce or eliminate the holding force (H) when the second actuator element (31) is in the activated state.

2. Thermal actuator arrangement (1) according to claim 1, wherein the thermal actuator elements (21, 31) are configured such that they change their shape when heated, in particular contract, and resume their original shape when cooled, in particular by the action of the corresponding opposing force, wherein the actuator elements (21, 31) comprise a thermoelastic material, in particular a shape memory alloy, a shape memory polymer or a bimetal.

3. Thermal actuator arrangement (1) according to claim 1 or 2, wherein the actuator (4) is movably mounted and comprises a defined first actuating position (S1) and/or a defined second actuating position (S2), which are defined by corresponding stop devices (51, 52, 53).

4. Thermal actuator arrangement (1) according to claim 3, wherein the first actuating position (S1) is defined by a first stop device (51) between the securing element (5) and the adjusting element (4) in conjunction with a stationary stop of a second stop device (52) of the securing element (5) and/or the second actuating position (S2) is defined by a stationary stop of a third stop device (53).

5. Thermal actuator arrangement (1) according to one of claims 1 to 4, wherein the first opposing force (F1) is configured to be smaller than the second opposing force (F2), wherein in particular a first spring element (22) for providing a first spring force (F1) as first opposing force has a smaller spring force than a second spring element (32) for providing a second spring force (F2) as second opposing force.

6. Thermal actuator arrangement (1) according to one of claims 1 to 5, wherein the first opposing force (F1) is configured such that it deforms the first actuator element (21) in its deactivated state plastically, quasiplastically and/or elastically such that the actuator (4) moves to the second actuating position (S2), wherein in particular the actuator (4) is moved into the second actuating position (S2) by the first opposing force (F1).

7. Thermal actuator arrangement (1) according to one of claims 1 to 6, wherein the actuator (4) is mounted so as to be translationally movable, wherein the securing element (5) is movable between a first securing position (SP1) and a second securing position (SP2) in parallel to the actuator (4).

8. Thermal actuator arrangement (1) according to of claims 1 to 7, wherein at least a rotor part of the actuator (4) is mounted rotationally movable, wherein the securing element (5) is mounted rotationally, and is movable between a first securing position (SP1) and a second securing position (SP2) coaxially to the actuator (4).

9. Thermal actuator arrangement (1) according to claim 8, wherein the first actuator element (21) is at least partially deflected around a circumferential surface of the actuator (4), and/or wherein the second actuator element (31) is at least partially deflected around a circumferential surface of the securing element (5).

10. Thermal actuator arrangement (1) according to one of claims 1 to 9, wherein the respective opposing force (F1, F2) is provided by at least one of the following elements: a compression spring, a tension spring, a torsion spring, a bending spring or a gravity-loaded mass element.

11. Thermal actuator arrangement (1) according to one of claims 1 to 10, wherein at least one of the actuator elements (21, 31) is formed to be elongated and elastic, and is in particular wire-shaped or rod-shaped.

12. Thermal actuator arrangement (1) according to one of claims 1 to 11, wherein at least one of the actuator elements (21, 31) is coupled to an energy supply in order to heat the respective actuator element (21, 31) by supplying electrical power.

13. Thermal actuator arrangement (1) according to one of claims 1 to 12, wherein a bistable element (71) is provided that is coupled to the actuator (4) such that when the actuator (4) is actuated, the bistable element changes from one bistable state to a further bistable state, wherein in particular the actuator (4) is coupled to the bistable element (71) in order to exert a translational or rotational actuation on the bistable element.

14. Thermal actuator arrangement (1) according to one of claims 1 to 13, wherein the actuator (4) is coupled to a valve actuator, a locking actuator, an unlocking actuator, a positioning actuator, a braking actuator, or a (contact) switch for actuation.

15. Method of operating a thermal actuator arrangement (1) according to one of claims 1 to 13, comprising the following steps:
- Actuating the second actuator element (31) to move the actuator (4) from the first actuating position (S1) to the second actuating position (S2),
- actuating the first actuator element (21) to move the actuator (4) from the second actuating position (S1) to the first actuating position (S2).

## Revendications

1. Dispositif d'actionnement thermique (1) pour déplacer un actionneur (4) entre une première position d'actionnement (S1) et une deuxième position d'actionnement (S2), comprenant :
- un premier actionneur partiel (2) comportant un premier élément d'actionnement thermique (21), auquel est appliquée une première force opposée (F1) ;
- un deuxième actionneur partiel (3) comportant un deuxième élément d'actionnement thermique (31) auquel est appliquée une deuxième force opposée (F2), les éléments d'actionnement (21, 31) étant configurés pour modifier leur forme contre la force opposée (F1, F2) dans chaque cas sous l'effet d'un changement de température ;
- un actionneur (4), qui est couplé au premier actionneur partiel (2), de sorte que, lorsque le premier élément d'actionnement (21) est désactivé, l'actionneur (4) est maintenu dans la première position d'actionnement (S1) lorsqu'une force de maintien (H) prend effet et, lorsque la force de maintien (H) est éliminée, l'actionneur (4) se déplace vers la deuxième position d'actionnement (S2) sous l'effet de la première force opposée (F1) ;
- un élément de fixation (5), qui est couplé au deuxième actionneur partiel (3) afin de fournir la force de maintien (H) lorsque le deuxième élément d'actionnement (31) est à l'état désactivé et de réduire ou d'éliminer la force de maintien (H) lorsque le deuxième élément d'actionnement (31) est à l'état activé.

2. Dispositif d'actionnement thermique (1) selon la revendication 1, dans lequel les éléments d'actionnement thermique (21, 31) sont configurés de manière à changer de forme lorsqu'ils sont chauffés, en particulier à se contracter, et à reprendre leur forme initiale lorsqu'ils sont refroidis, en particulier sous l'action de la force opposée correspondante, dans lequel les éléments d'actionnement (21, 31) sont constitués d'un matériau thermoélastique, en particulier d'un alliage à mémoire de forme, d'un polymère à mémoire de forme ou d'un bimétal.

3. Dispositif d'actionnement thermique (1) selon la revendication 1 ou 2, dans lequel l'actionneur (4) est monté mobile et comprend une première position d'actionnement définie (S1) et/ou une deuxième position d'actionnement définie (S2), qui sont définies par des dispositifs de butée correspondants (51, 52, 53).

4. Dispositif d'actionnement thermique (1) selon la revendication 3, dans lequel la première position d'actionnement (S1) est définie par un premier dispositif de butée (51) entre l'élément de fixation (5) et l'actionneur (4) en conjonction avec une butée fixe d'un deuxième dispositif de butée (52) de l'élément de fixation (5) et/ou la deuxième position d'actionnement (S2) est définie par une butée fixe d'un troisième dispositif de butée (53).

5. Dispositif d'actionnement thermique (1) selon l'une des revendications 1 à 4, dans lequel la première force opposée (F1) est configurée pour être plus petite que la deuxième force opposée (F2), dans lequel en particulier un premier élément de ressort (22) pour fournir une première force de ressort (F1) en tant que première force opposée a une force de ressort plus petite qu'un deuxième élément de ressort (32) pour fournir une deuxième force de ressort (F2) en tant que deuxième force opposée.

6. Dispositif d'actionnement thermique (1) selon l'une des revendications 1 à 5, dans lequel la première force opposée (F1) est configurée de manière à déformer le premier élément d'actionneur (21) dans son état désactivé plastiquement, quasi plastiquement et/ou élastiquement de sorte que l'actionneur (4) se déplace vers la deuxième position d'actionnement (S2), l'actionneur (4) étant notamment déplacé dans la deuxième position d'actionnement (S2) par la première force opposée (F1).

7. Dispositif d'actionnement thermique (1) selon l'une des revendications 1 à 6, dans lequel l'actionneur (4) est monté mobile en translation, l'élément de fixation (5) étant mobile entre une première position de fixation (SP1) et une deuxième position de fixation (SP2) parallèlement à l'actionneur (4).

8. Dispositif d'actionnement thermique (1) selon l'une des revendications 1 à 7, dans lequel au moins une partie du rotor de l'actionneur (4) est montée mobile en rotation, dans lequel l'élément de fixation (5) est monté en rotation, et est mobile entre une première position de fixation (SP1) et une seconde position de fixation (SP2) coaxialement à l'actionneur (4).

9. Dispositif d'actionnement thermique (1) selon la revendication 8, dans lequel le premier élément d'actionneur (21) est au moins partiellement dévié autour d'une surface circonférentielle de l'actionneur (4), et/ou dans lequel le second élément d'actionneur (31) est au moins partiellement dévié autour d'une surface circonférentielle de l'élément de fixation (5).

10. Dispositif d'actionnement thermique (1) selon l'une des revendications 1 à 9, dans lequel la force opposée respective (F1, F2) est fournie par au moins l'un des éléments suivants : un ressort de compression, un ressort de traction, un ressort de torsion, un ressort de flexion ou un élément de masse soumis à la gravité.

11. Dispositif d'actionnement thermique (1) selon l'une des revendications 1 à 10, dans lequel au moins un des éléments d'actionnement (21, 31) est formé pour être allongé et élastique, et est en particulier en forme de fil ou de tige.

12. Dispositif d'actionnement thermique (1) selon l'une des revendications 1 à 11, dans lequel au moins un des éléments d'actionnement (21, 31) est couplé à une alimentation en énergie afin de chauffer l'élément d'actionnement respectif (21, 31) en fournissant de l'énergie électrique.

13. Dispositif d'actionnement thermique (1) selon l'une des revendications 1 à 12, dans lequel un élément bistable (71) est fourni, couplé à l'actionneur (4) de sorte que lorsque l'actionneur (4) est actionné, l'élément bistable passe d'un état bistable à un autre état bistable, dans lequel en particulier l'actionneur (4) est couplé à l'élément bistable (71) afin d'exercer une action de translation ou de rotation sur l'élément bistable.

14. Dispositif d'actionnement thermique (1) selon l'une des revendications 1 à 13, dans lequel l'actionneur (4) est couplé à un actionneur de vanne, un actionneur de verrouillage, un actionneur de déverrouillage, un actionneur de positionnement, un actionneur de freinage ou un commutateur (de contact) pour l'actionnement.

15. Procédé de fonctionnement d'un dispositif d'actionnement thermique (1) selon l'une des revendications 1 à 13, comprenant les étapes suivantes :
- Actionner le deuxième élément d'actionnement (31) pour déplacer l'actionneur (4) de la première position d'actionnement (S1) à la deuxième position d'actionnement (S2),
- actionner le premier élément d'actionnement (21) pour déplacer l'actionneur (4) de la deuxième position d'actionnement (S1) à la première position d'actionnement (S2).
